# EUROPÄISCHE PATENTSCHRIFT

(11) **EP 0 907 890 B1**
(45) Veröffentlichungstag und Bekanntmachung des Hinweises auf die Patenterteilung: **22.05.2002**
(21) Anmeldenummer: 97931662.7
(22) Anmeldetag: 26.06.1997
(51) Int. Cl.: G01N 35/10, C12N 15/10, G01N 33/543, B08B 3/02

(54) **VORRICHTUNG ZUR KONTAMINATIONSFREIEN ZU- UND ABFUHR VON FLÜSSIGKEIT**
DEVICE FOR CONTAMINATION-FREE DELIVERY AND DISCHARGE OF LIQUID
DISPOSITIF POUR ACHEMINER ET EVACUER DU LIQUIDE SANS RISQUE DE CONTAMINATION

(30) Priorität: 29.06.1996 DE 19626234
(43) Veröffentlichungstag der Anmeldung: 14.04.1999
(73) Patentinhaber: november Aktiengesellschaft Gesellschaft für Molekulare Medizin, 91056 Erlangen (DE)
(72) Erfinder: LANGE, Hans, D-68623 Lambertheim (DE)
(74) Vertreter: Gassner, Wolfgang, Dr.
(86) Internationale Anmeldenummer: DE9701331
(87) Internationale Veröffentlichungsnummer: WO9800718

(56) Entgegenhaltungen:
- EP-A- 0 213 618
- EP-A- 0 328 859
- US-A- 4 341 568
- US-A- 5 158 101

## Beschreibung

Die Erfindung betrifft eine Vorrichtung nach dem Oberbegriff des Patentanspruchs 1.

Eine solche Vorrichtung ist aus der US 4,341,568 bekannt.

Nach dem Stand der Technik sind außerdem Einweg-Pipettenspitzen bekannt. Solche Einweg-Pipettenspitzen werden z.B. von der Firma Eppendorf vertrieben.

Sie werden bei vielen Analyseprozessen zur Trennung von gebundener und fester Phase in einem Reaktionsgefäß mit anschließendem Waschprozeß für die Festphase verwendet. So z.B. beim Immunoassay, bei dem die Festphase in Form von magnetischen Partikeln oder in Form von sogenannten "coated tubes" vorliegen kann. Bei "coated tubes" ist die Festphase gleichzeitig die Wand des Reaktionsgefäßes. Der Wachsprozeß besteht jeweils aus drei Schritten:
a) Absaugen der zu verwerfenden Reaktionslösung, wobei die Festphase zurückgehalten wird,
b) Zugabe von Waschlösung,
c) Absaugen der Waschlösung und ggf.
d) Wiederholung der Schritte lit. b und lit. c..

Insbesondere bei der Isolierung und Aufreinigung von Nukleinsäuren mit nachgeschalteter Amplifikationsreaktion ist es erforderlich, daß beim Waschschritt keine Kontamination der Analysenprobe auftritt. Dabei ist besonders die Polymerase-Kettenreaktion empfindlich gegenüber Kontaminationen. Eine solche Kontamination kann beim Einbringen und Absaugen von Waschlösung durch dabei entstehende Aerosole verursacht werden, die sich über die Luft verbreiten und Verschleppungen von einem Reaktionsgefäß zum Nächsten ergeben.

Aufgabe der Erfindung ist es, die Nachteile des Stands der Technik zu beseitigen. Es soll insbesondere eine Vorrichtung angegeben werden, mit der eine kontaminationsfreie Zu- und Abfuhr von Flüssigkeiten in und aus einem Reaktionsgefäß durchführbar und ein gezieltes Absaugen eines Flüssigkeitsüberstands über am Boden des Reaktionsgefäßes abgesetzten Feststoffpartikeln möglich ist.

Diese Aufgabe wird durch die Merkmale des Patentanspruchs 1 gelöst. Zweckmäßige Ausgestaltungen der Erfindung ergeben sich aus den Merkmalen der Ansprüche 2 bis 15.

Nach der Erfindung ist das Rohr in Richtung der ersten Öffnung sich konisch verjüngend ausgebildet. Dadurch ist es möglich, einen Flüssigkeitsüberstand gezielt abzusaugen. Beim Absaugen von Waschlösung durch das Rohr wird eine Einsaugen von bsp an Magnetpartikel gebundenen Nukleinsäuren vermieden.

Vorteilhafterweise befindet sich der erste Anschlußstutzen innerhalb des zweiten Anschlußstutzens. Das ermöglicht eine besonders platzsparende Ausgestaltung der Vorrichtung.

Nach einem weiteren Ausgestaltungsmerkmal kann der zweite Anschlußstutzen einen Flansch aufweisen. Dieser dient beim Einstecken der Vorrichtung in ein Reaktionsgefäß als Begrenzung der Einstecktiefe.

Zweckmäßigerweise ist der zweite Anschlußstutzen mit einem das Rohr umgebenden Ringkanal in Verbindung, wobei der Ring - kanal in der Nähe des zweiten Anschlußstutzens einen zylindrischen Abschnitt aufweist. Der zylindrische Abschnitt liegt beim Einstecken der Vorrichtung in ein Reaktionsgefäß parallel an der Innenwand des Reaktionsgefäßes an und bewirkt so eine Abdichtung. An den zylindrischen Abschnitt kann sich ein konischer Abschnitt anschließen, der mit der Außenwand des Rohrs verbunden ist. Die zweite Öffnung befindet sich dabei vorteilhafterweise im konischen Abschnitt. Der zylindrische Abschnitt ist vorteilhafterweise so ausgestaltet, daß er in das Reaktionsgefäß einsteckbar ist.

Nach einem weiteren Ausgestaltungsmerkmal kann die Vorrichtung aus leitfähigem Kunststoff hergestellt sein. Dadurch ist es möglich, ein die Füllhöhe im Reaktionsgefäß wiedergebendes Signal abzugreifen und dadurch die Füllhöhe automatisch zu steuern.

Nach einem besonders vorteilhaften Ausgestaltungsmerkmal sind 96 Reaktionsgefäße als "96-Napf-Titrierplatte" miteinander kombiniert. Damit ist es möglich, 96 verschiedene Proben gleichzeitig zu waschen.

Nachfolgend werden Ausführungsbeispiele der Erfindung anhand der Zeichnung näher erläutert. Hierin zeigen:
- Fig. 1: einen schematischen Querschnitt durch eine Vorrichtung,
- Fig. 2: einen schematischen Querschnitt durch ein Anschlußstück,
- Fig. 3: einen schematischen Querschnitt durch die Vorrichtung gemäß Fig. 1 in Verbindung mit dem Anschlußstück nach Fig. 2,
- Fig. 4: einen schematischen Querschnitt durch die Anordnung nach Fig. 3 in Verbindung mit einem Reaktionsgefäß,
- Fig. 5: einen schematischen Querschnitt durch die Anordnung gemäß Fig. 4 in Kombination mit einem Pipettenspitzenabwerfer,
- Fig. 6: einen schematischen Querschnitt durch eine Einrichtung zum Waschen und
- Fig. 7: einen schematischen Querschnitt durch eine Vorrichtung mit Filterelement.

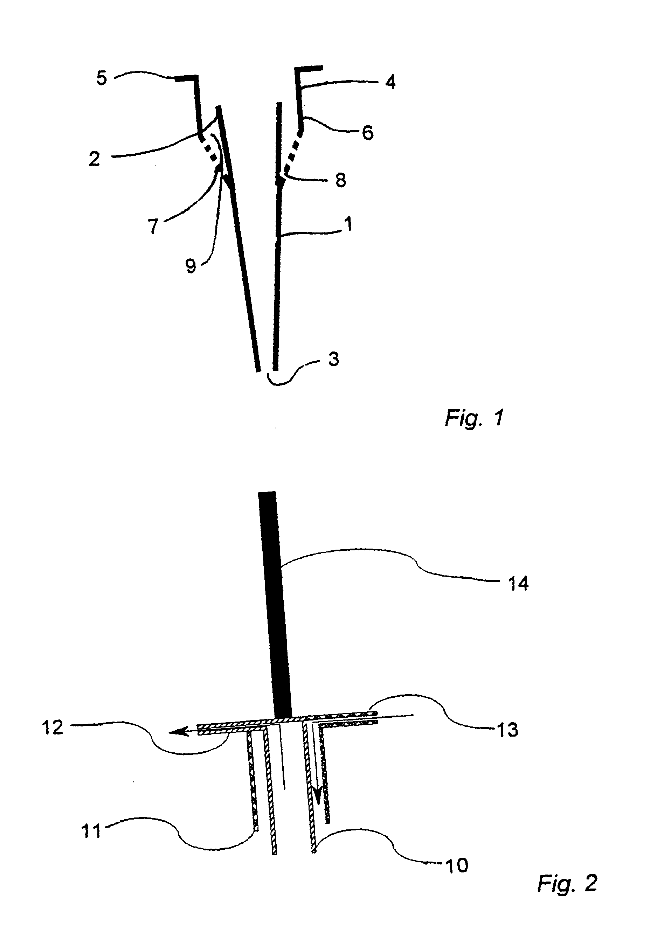

In Fig. 1 ist eine erfindungsgemäße Vorrichtung im schematischen Querschnitt gezeigt. Ein sich konisch verjüngendes Rohr 1 ist in der Nähe seines einen Endes mit einem Anschlußstutzen 2 versehen, mit dem es auf einen Anschluß oder auf eine nach dem Kolbenpumpenprinzip arbeitenden Mehrkanal-Pipette aufsteckbar ist. Am anderen Ende ist eine erste Öffnung 3 vorgesehen. Ein zweiter Anschlußstutzen 4 weist einen sich vom Umfangsrand erstreckenden Flansch 5 auf. Der zweite Anschlußstutzen 4 weist ferner einen zylindrischen Abschnitt 6 auf, an den sich ein konischer Abschnitt 7 anschließt, der mit der Außenwand des Rohrs 3 verbunden ist. Im Bereich des konischen Abschnitts 7 sind zweite Öffnungen 8 vorgesehen, die als Düsen ausgebildet sein können. Der zylindrische 6 und der konische Abschnitt 7 bilden einen Ringkanal 9. Der Ringkanal 9 ist getrennt vom durch das Rohr 1 gebildeten Durchgang.

Fig. 2 zeigt eine schematische Querschnittsansicht durch einen Anschluß. Dieser ist im wesentlichen aus einem inneren Anschlußrohr 10 und einem äußeren Anschlußrohr 11 gebildet. Das innere Anschlußrohr 10 steht mit einem ersten 12 und das äußere Anschlußrohr 11 mit einem zweiten Anschlußstück 13 in Verbindung. Die Anschlußstücke 12 bzw. 13 können z.B. über Schläuche mit geeigneten Pumpen zur Zu- und Abfuhr von Flüssigkeit verbunden sein.

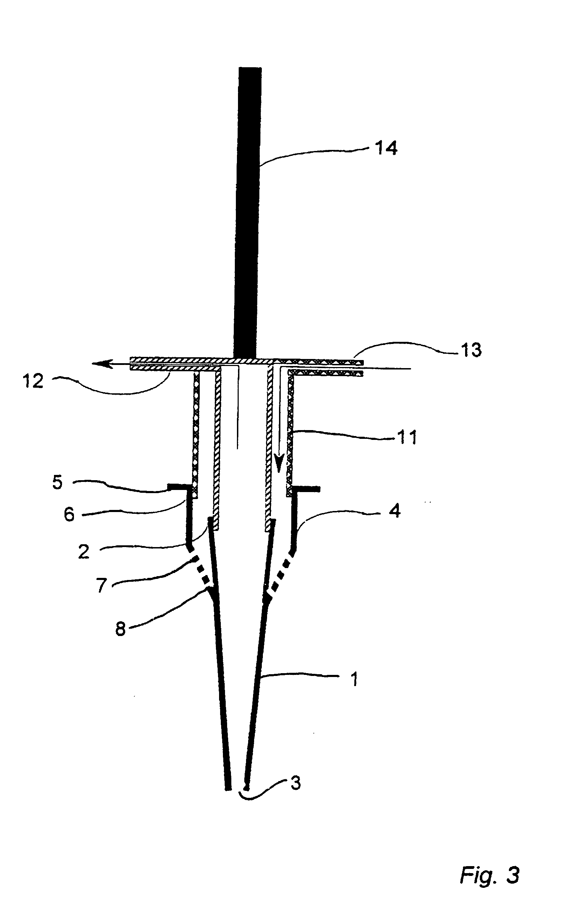

Fig. 3 zeigt im schematischen Querschnitt die Vorrichtung nach Fig. 1 in Verbindung mit dem Anschluß gemäß Fig. 2. Mit 14 ist ein Element zur Befestigung der Vorrichtung an einem Pipettierroboter bezeichnet.

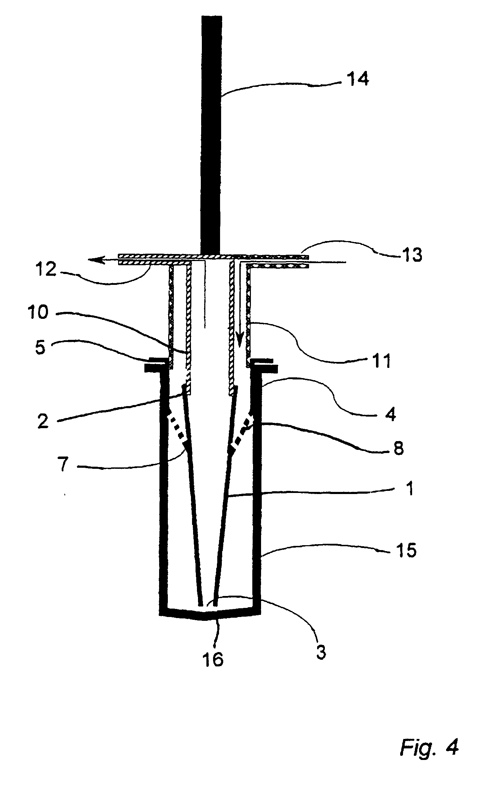

Fig. 4 zeigt im schematischen Querschnitt die Vorrichtung gemäß Fig. 3, wobei diese in ein Reaktionsgefäß 15 eingesteckt ist. Der zylindrische Abschnitt 6 liegt dicht an der Innenwand des Reaktionsgefäßes 15 an. Die Verbindung erfolgt durch Reibschluß oder durch Verrastung. Die Dichtung kann aber auch durch eine Dichtlippe oder einen O-Ring erfolgen. Das Reaktionsgefäß hat ein Volumen im Bereich von 0,1 - 100 ml, vorzugsweise von 0,1 - 0,5 ml. Die erste Öffnung 3 des Rohrs 1 befindet knapp oberhalb des Bodens 16 des Reaktionsgefäßes 15.

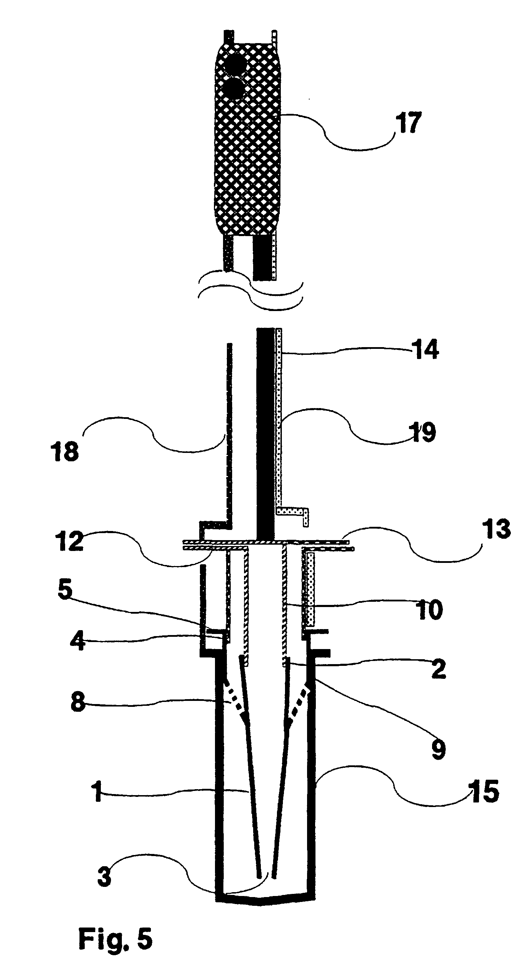

Fig. 5 zeigt die Vorrichtung gemäß Fig. 4 mit einem Pipettenspitzenabwerfer 17 im schematischen Querschnitt. Der mit dem Halteelement 14 am Pipettenspitzenabwerfer 17 gehaltene Anschluß ist mit der Vorrichtung verbunden. Ein Niederhalter 18 erstreckt sich vom Pipettenspitzenabwerfer 17 zum oberen Rand des Reaktionsgefäßes 15. Ein Abwerfer 19 erstreckt sich vom Pipettenspitzenabwerfer 17 bis in die Nähe des Flansches 5.

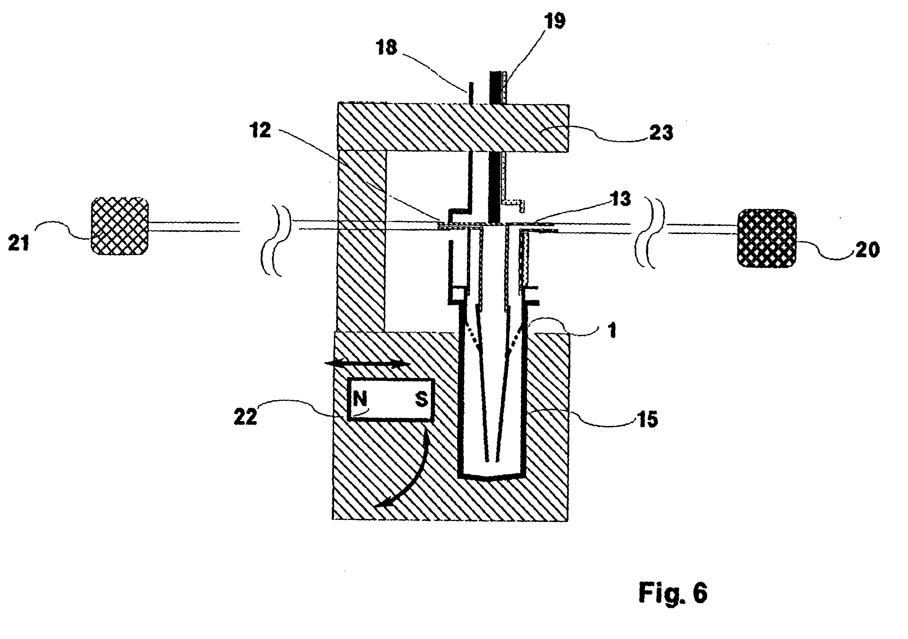

Fig. 6 zeigt eine schematische Querschnittsansicht der Vorrichtung gemäß Fig. 5 in einer Einrichtung zum automatischen Waschen. Die Einrichtung umfaßt eine mit dem ersten Anschlußstück 12 verbundene Absaugeinheit 21 sowie eine mit dem zweiten Anschlußstück 13 verbundene Dosiereinheit 20. In der Nähe des Reaktionsgefäßes 15 ist ein beweglicher Permanentmagnet 22 vorgesehen. Der Pipettenspitzenabwerfer 17 ist in einem Haltearm 23 gehalten. Dabei kann es sich um einen von einem Roboter gesteuerten Arm handeln.

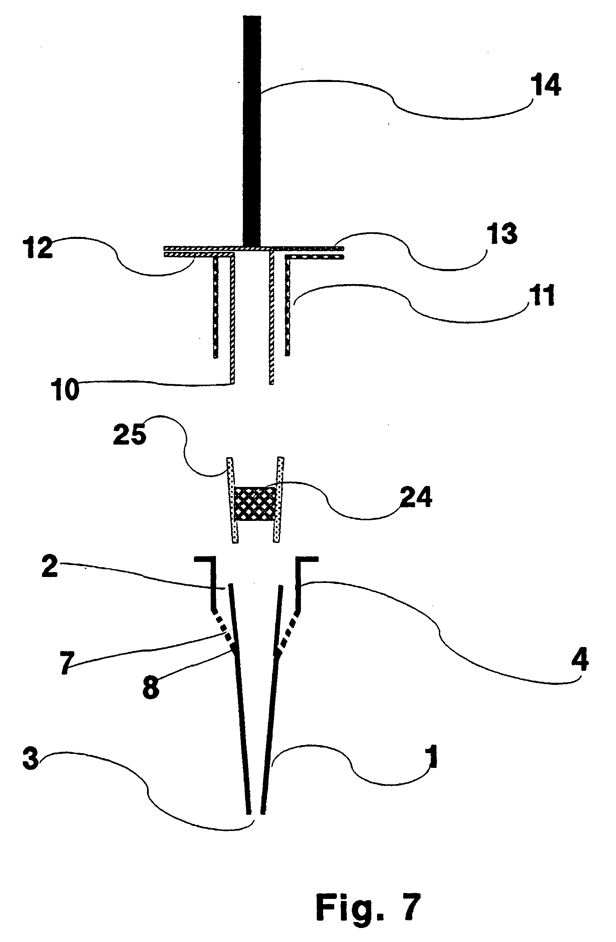

In Fig. 7 ist schließlich eine schematische Querschnittsansicht der erfindungsgemäßen Vorrichtung mit einem Filtereinsatz 24 gezeigt. Im Filtereinsatz 24 ist einem Filterelement 25 aufgenommen. Das Filterelement 25 ist so ausgestaltet, daß es in den ersten Anschlußstutzen 2, und darin zugleich das innere Anschlußrohr 10 einsteckbar ist.

### Die Funktion der Vorrichtung ist folgende:

Die üblicherweise aus spritzgegossenem Kunststoff hergestellte Vorrichtung wird zunächst auf den Anschluß gesteckt. Das kann automatisch dadurch erfolgen, daß der Arm eines Pipettierroboters den Anschluß gleichzeitig in den ersten 2 und den zweiten Anschlußstutzen 4 der in einem Vorrat befindlichen Vorrichtung drückt.

Dann wird die Vorrichtung, ggf. ebenfalls mittels des Pipettierroboters, in das Reaktionsgefäß 15 eingesteckt. Eine Dosiereinheit 20 wird in Betrieb gesetzt und Waschlösung via dem zweiten Anschlußstück 13 in den Ringkanal 9 und von da durch die zweiten Öffnungen 8 in das Reaktionsgefäß 15 gegeben. Nach einem vorgegebenen Zeitabschnitt wird die Waschlösung durch Inbetriebsetzen der Absaugeinheit 21 via erster Öffnung 3, Rohr 1 und erstem Anschlußstück 12 abgesaugt und verworfen. Der Vorgang kann beliebig oft wiederholt werden. Vor dem Absaugen können durch eine Bewegung des Permanentenmagneten 22 im Reaktionsgefäß 15 befindliche Magnetpartikel an eine Seite desselben gezogen werden, so daß ein unbeabsichtigtes Absaugen der Magnetpartikel vermieden wird.

Zur weiteren Erläuterung der Funktion der Vorrichtung wird im folgenden Beispiel die Isolierung von DNA aus einer Vollblutprobe beschrieben.

Zunächst wird ein Lysepuffer und ein Waschpuffer nach dem Verfahren von Boom et al. hergestellt. Als Festphase werden magnetische Glaspartikel von der Firma FMC benutzt. Das Volumen des Reaktionsgefäßes beträgt 2 ml.

20 µl Vollblut werden mit 1 ml Lysepuffer verarbeitet. Als Festphase werden 100 µl der hergestellten Suspension eingesetzt. Zum Waschen der Magnetpartikel wird das Reaktionsgefäß 15 in einen Magnetseparator gestellt (Boehringer-Mannheim, Bestell-Nr: 1 641 794). Der Überstand wird sodann mit der erfindungsgemäßen Vorrichtung abgesaugt, das Reaktionsgefäß 15 vom Magnetseparator genommen und die Waschlösung zugegeben. Anschließend wird nochmals die Magnetseparation vorgenommen und die Waschlösung abgesaugt. Dieser Vorgang wird zweimal wiederholt, wobei während des Waschprozesses die erfindungsgemäße Vorrichtung fest nach Art eines Deckels auf dem Reaktionsgefäß 15 sich befindet. Ein Kontamination von DNA ist nicht beobachtet worden.

### Bezugszeichenliste

- 1: Rohr
- 2: erster Anschlußstutzen
- 3: erste Öffnung
- 4: zweiter Anschlußstutzen
- 5: Flansch
- 6: zylindrischer Abschnitt
- 7: konischer Abschnitt
- 8: zweite Öffnung
- 9: Ringkanal
- 10: inneres Anschlußstück
- 11: äußeres Anschlußstück
- 12: erstes Anschlußstück
- 13: zweites Anschlußstück
- 14: Halteelement
- 15: Reaktionsgefäß
- 16: Boden
- 17: Pipettenspitzerabwerfer
- 18: Niederhalter
- 19: Abwerfer
- 20: Dosiereinheit
- 21: Absaugeinheit
- 22: Permanentmagnet
- 23: Halterung für Pipettenspitzerabwerfer
- 24: Filtereinsatz
- 25: Filterelement

## Patentansprüche

1. Vorrichtung zur kontaminationsfreien Zu- und Abfuhr von Flüssigkeit in und aus einem Reaktionsgefäß (15) mit einem Rohr (1), dessen eines Ende als erster Anschlußstutzen (2) zum Anschluß an eine Pipette oder dgl. ausgebildet ist und dessen anderes Ende eine erste Öffnung (3) aufweist, wobei in der Nähe des ersten Endes ein zweiter (4) mit mindestens einer zweiten Öffnung (8) in Verbindung stehender Anschlußstutzen vorgesehen ist, **dadurch gekennzeichnet, daß** das Rohr (1) in Richtung der ersten Öffnung (3) sich konisch verjüngend ausgebildet ist.

2. Vorrichtung nach Anspruch 1, wobei der erste Anschlußsturzen (2) innerhalb des zweiten Anschlußstutzens (4) sich befindet.

3. Vorrichtung nach einem der vorhergehenden Ansprüche, wobei der zweite Anschlußstutzen (4) einen Flansch (5) aufweist.

4. Vorrichtung nach einem der vorhergehenden Ansprüche, wobei der zweite Anschlußstutzen (4) mit einem das Rohr (1) umgebenden Ringkanal (9) in Verbindung steht.

5. Vorrichtung nach einem der vorhergehenden Ansprüche, wobei der Ringkanal (9) in der Nähe des zweiten Anschlußstutzens (4) einen zylindrischen Abschnitt (6) aufweist.

6. Vorrichtung nach Anspruch 5, wobei sich an den zylindrische Abschnitt (6) ein konischer Abschnitt (7) anschließt, der mit der Außenwand des Rohrs (1) verbunden ist.

7. Vorrichtung nach Anspruch 6, wobei die zweite Öffnung (8) im konischen Abschnitt (7) sich befindet.

8. Vorrichtung nach einem der vorhergehenden Ansprüche, wobei der zylindrische Abschnitt (6) in das Reaktionsgefäß (15) einsteckbar ist.

9. Vorrichtung nach Anspruch 8, wobei die zweite Öffnung (8) im vollständig auf das Reaktionsgefäß (15) eingesteckten Zustand einen Abstand von 1 - 10 mm, vorzugsweise von 2 - 5 mm, vom oberen Rand das Reaktionsgefäßes aufweist.

10. Vorrichtung nach Anspruch 8 oder 9, wobei die erste Öffnung (3) im vollständig auf das Reaktionsgefaß (15) eingesteckten Zustand einen Abstand von 0,1 - 5 mm, vorzugsweise von 0,5 - 2 mm, vom Boden (16) aufweist.

11. Vorrichtung nach einem der verhergehenden Ansprüche, wobei ein auf den ersten Anschlußstutzen (2) aufgesteckbares Filterelement (25) vorgesehen ist.

12. Vorrichtung nach einem der vorhergehenden Ansprüche, wobei das Reaktionsgefäß (15) Bestandteil einer 96 Reaktionsgefäße (15) aufweisenden Titrierplatte ist.

13. Pipette, insbasondere Mehrkanal-Pipette, mit einer Vorrichtung nach einem der vorhergehenden Ansprüche.

14. Pipettierroboter mit einer Vorrichtung nach einem der Ansprüche 1 - 13.

15. Verwendung der Vorrichtung, der Pipette oder des Pipettierroboters nach einem der vorhergehenden Ansprüche zu Analyse und/oder Isolierung von Nukleinsäuren.

## Claims

1. Device for the contamination-free delivery and discharge of liquid into and from a reaction vessel (15), having a tube (1), one end of which is designed as a first connection fitting (2) for connection to a pipette or the like and the other end of which has a first opening (3), wherein a second connection fitting (4), which is in communication with at least a second opening (8), is provided in the vicinity of the first end, **characterized in that** the tube (1) is designed so as to taper conically towards the first opening (3).

2. Device according to Claim 1, in which the first connection fitting (2) is situated inside the second connection fitting (4).

3. Device according to one of the preceding claims, in which the second connection fitting (4) has a flange (5).

4. Device according to one of the preceding claims, in which the second connecting fitting (4) is in communication with an annular passage (9) which surrounds the tube (1).

5. Device according to one of the preceding claims, in which the annular passage (9) has a cylindrical section (6) in the vicinity of the second connection fitting (4).

6. Device according to Claim 5, in which a conical section (7), which is connected to the outer wall of the tube (1), adjoins the cylindrical section (6).

7. Device according to Claim 6, in which the second opening (8) is situated in the conical section (7).

8. Device according to one of the preceding claims, in which the cylindrical section (6) can be fitted into the reaction vessel (15).

9. Device according to Claim 8, in which the second opening (8), in the state in which it has been fitted completely onto the reaction vessel (15), is at a distance of from 1 - 10 mm, preferably from 2 to 5 mm, from the top edge of the reaction vessel.

10. Device according to Claim 8 or 9, in which the first opening (3), in the state in which it has been fitted completely onto the reaction vessel (15), is at a distance of from 0,1 - 5 mm, preferably from 0,5 - 2 mm, from the bottom (16).

11. Device according to one of the preceding claims, in which a filtering element (25), which can be fitted onto the first connection fitting (2), is provided.

12. Device according to one of the preceding claims, in which the reaction vessel (15) forms part of a titration plate which has 96 reaction vessels (15).

13. Pipette, in particular multipassage pipette, having a device according to one of the preceding claims.

14. Pipetting robot having a device according to one of Claims 1 - 13.

15. Use of the device, the pipette or the pipetting robot according to one of the preceding claims for the analysis and/or isolation of nucleic acids.

## Revendications

1. Dispositif pour l'acheminement et la décharge, exempts de contamination, de liquide à et depuis un vase réactionnel (15), comprenant un tuyau (1), dont une extrémité est conçue en tant que premier raccord (2) pour le raccord à une pipette ou similaire et dont l'autre extrémité présente une première ouverture (3), dans lequel à proximité de la première extrémité, est prévu un deuxième raccord (4) qui communique avec au moins une deuxième ouverture (8), **caractérisé en ce que**, le tuyau (1) est conçu de manière à se rétrécir coniquement dans la direction de la première ouverture (3).

2. Dispositif selon la revendication 1, dans lequel le premier raccord (2) se trouve à l'intérieur du deuxième raccord (4). -

3. Dispositif selon l'une quelconque des revendications précédentes, dans lequel le deuxième raccord (4) présente une bride (5).

4. Dispositif selon l'une quelconque des revendications précédentes, dans lequel le deuxième raccord (4) communique avec un canal annulaire (9) entourant le tuyau (1).

5. Dispositif selon l'une quelconque des revendications précédentes, dans lequel le canal annulaire (9) présente une portion cylindrique (6) à proximité du deuxième raccord (4).

6. Dispositif selon la revendication 5, dans lequel une portion conique (7) se raccorde à la portion cylindrique (6) et est connectée à la paroi extérieure du tuyau (1).

7. Dispositif selon la revendication 6, dans lequel la deuxième ouverture (8) se trouve dans la portion conique (7).

8. Dispositif selon l'une quelconque des revendications précédentes, dans lequel la portion cylindrique (6) peut être ajustée dans le vase réactionnel (15).

9. Dispositif selon la revendication 8, dans lequel la deuxième ouverture (8) se trouve, dans l'état entièrement ajusté sur le vase réactionnel (15), à une distance de 1 à 10 mm, de préférence de 2 à 5 mm, depuis le bord supérieur du vase réactionnel.

10. Dispositif selon la revendication 8 ou 9, dans lequel la première ouverture (3) se trouve, dans l'état entièrement ajusté sur le vase réactionnel (15), à une distance de 0,1 à 5 mm, de préférence de 0,5 à 2 mm, du fond (16).

11. Dispositif selon l'une quelconque des revendications précédentes, dans lequel il est prévu un élément filtrant (25) pouvant être ajusté sur le premier raccord (2).

12. Dispositif selon l'une quelconque des revendications précédentes, dans lequel le vase réactionnel (15) fait partie d'une plaque de titrage qui présente 96 vases réactionnels (15).

13. Pipette, en particulier pipette à plusieurs canaux, comportant un dispositif selon l'une quelconque des revendications précédentes.

14. Robot de pipetage comportant un dispositif selon l'une quelconque des revendications 1 à 13.

15. Utilisation du dispositif, de la pipette ou du robot de pipetage selon l'une quelconque des revendications précédentes pour l'analyse et ou l'isolation d'acide nucléiques.
